# EUROPEAN PATENT APPLICATION

(11) **EP 4 738 743 A1**
(43) Date of publication of application: **06.05.2026**
(21) Application number: 23942917.8
(22) Date of filing: 29.06.2023
(51) Int. Cl.: H04L 1/1822, H04L 1/1829, H04L 1/1867, H04L 69/28

(54) **TIMER START-UP METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/104305
(87) International publication number: WO 2025/000409

(57) **Abstract**

The present disclosure provides a timer start-up method and apparatus, a device, and a storage medium. The method comprises: a physical downlink control channel (PDCCH) indicates link transmission, and, on the basis of at least one configuration among a hybrid automatic repeat request (HARQ) mode configuration and a HARQ feedback configuration of the PDCCH, determines whether to start up a HARQ round trip time (RTT) timer corresponding to the link transmission. In the present disclosure, the accuracy in starting up a HARQ RTT timer can be improved, the accuracy of HARQ initiation is improved, and the accuracy of TB retransmission is improved.

## Description

### TECHNICAL FIELD

The disclosure relates to the field of communication technologies, in particular to a method for starting a timer, an apparatus, a device and a storage medium.

### BACKGROUND

In a communication system, non-terrestrial network (NTN) is an important technology introduced in mobile communication technologies. NTN provides wireless resources via satellites (or unmanned aircrafts) rather than terrestrial base stations. In this communication system, for example, retransmission scheduling may be monitored by starting a hybrid automatic repeat request (HARQ) round-trip time (RTT) timer.

### SUMMARY

The disclosure provides a method for starting a timer, an apparatus, a device and a storage medium, to solve the problem that the inaccurate starting of a hybrid automatic repeat request (HARQ) round-trip time (RRT) timer results in low transmission block (TB) retransmission accuracy.

According to a first aspect, the embodiments of the disclosure provide a method for starting a timer. The method includes:
in a case of a physical downlink control channel (PDCCH) indicating a link transmission, determining, based on at least one of a HARQ mode configuration or a HARQ feedback configuration of the PDCCH, whether to start a HARQ RTT timer corresponding to the link transmission.

According to a second aspect, the embodiments of the disclosure provide a method for starting a timer. The method includes:
in a case of a PDCCH indicating a link transmission, sending at least one of a HARQ mode configuration or a HARQ feedback configuration of the PDCCH to a terminal, in which the at least one of the HARQ mode configuration or the HARQ feedback configuration of the PDCCH is used to determine whether to start a HARQ RTT timer corresponding to the link transmission.

According to a third aspect, the embodiments of the disclosure provide a terminal. The terminal includes:
a processing module, configured to, in a case of a physical downlink control channel (PDCCH) indicating a link transmission, determine, based on at least one of a HARQ mode configuration or a HARQ feedback configuration of the PDCCH, whether to start a HARQ RTT timer corresponding to the link transmission.

According to a fourth aspect, the embodiments of the disclosure provide a network device. The network device includes:
a transceiver module, configured to, in a case of a PDCCH indicating a link transmission, send at least one of a HARQ mode configuration or a HARQ feedback configuration of the PDCCH to a terminal, in which the at least one of the HARQ mode configuration or the HARQ feedback configuration of the PDCCH is used to determine whether to start a HARQ RTT timer corresponding to the link transmission.

According to a fifth aspect, the embodiments of the disclosure provide a terminal. The terminal includes:
one or more processors;
in which the terminal is configured to implement the method for starting the timer in the first aspect.

According to a sixth aspect, the embodiments of the disclosure provide a network device. The network device includes:
one or more processors;
in which the network device is configured to implement the method for starting the timer in the second aspect.

According to a seventh aspect, the embodiments of the disclosure provide a communication system. The communication system includes a terminal and a network device. The terminal is configured to implement the method for starting the timer in the first aspect, and the network device is configured to implement the method for starting the timer in the second aspect.

According to an eighth aspect, the embodiments of the disclosure provide a storage medium. The storage medium stores instructions, and when the instructions are executed by a communication device, the communication device is caused to implement the method for starting the timer in the first aspect or the method for starting the timer in the second aspect.

### BRIEF DESCRIPTION OF THE DRAWINGS

The above and/or additional aspects and advantages of the disclosure are apparent and easily understood from the following descriptions of the embodiments in combination with the accompanying drawings.
FIG. 1 is a schematic diagram of a communication system according to an embodiment of the disclosure.
FIG. 2 is a schematic diagram of a wireless connection maintaining system according to an embodiment of the disclosure.
FIG. 3 is a schematic diagram of a transparent transmission mode according to an embodiment of the disclosure.
FIG. 4 is a schematic diagram of a retransmission mode according to an embodiment of the disclosure.
FIG. 5 is an interactive schematic diagram of a method for starting a timer according to an embodiment of the disclosure.
FIG. 6A is a flowchart of a method for starting a timer according to an embodiment of the disclosure.
FIG. 6B is a flowchart of a method for starting a timer according to an embodiment of the disclosure.
FIG. 6C is a flowchart of a method for starting a timer according to an embodiment of the disclosure.
FIG. 6D is a flowchart of a method for starting a timer according to an embodiment of the disclosure.
FIG. 6E is a flowchart of a method for starting a timer according to an embodiment of the disclosure.
FIG. 7A is a flowchart of a method for starting a timer according to an embodiment of the disclosure.
FIG. 8A is a flowchart of a method for starting a timer according to an embodiment of the disclosure.
FIG. 9A is a schematic diagram of a terminal according to an embodiment of the disclosure.
FIG. 9B is a schematic diagram of a network device according to an embodiment of the disclosure.
FIG. 10A is a schematic diagram of a communication device according to an embodiment of the disclosure.
FIG. 10B is a schematic diagram of a chip according to an embodiment of the disclosure.

### DETAILED DESCRIPTION

The disclosure provides a method for starting a timer, an apparatus, a device and a storage medium, to solve the problem that the inaccurate starting of a hybrid automatic repeat request (HARQ) round-trip time (RRT) timer results in an inaccurate transmission of a transmission block (TB).

According to a first aspect, the embodiments of the disclosure provide a method for starting a timer. The method includes:
in a case of a physical downlink control channel (PDCCH) indicating a link transmission, determining, based on at least one of a HARQ mode configuration or a HARQ feedback configuration of the PDCCH, whether to start a HARQ RTT timer corresponding to the link transmission.

In the above embodiment, it is determined whether to start the HARQ RTT timer based on the at least one of the HARQ mode configuration or the HARQ feedback configuration, which may provide a starting mechanism of the HARQ RTT timer, improve an accuracy of the starting of the HARQ RTT timer, enhance an accuracy of HARQ initiation, and improve an accuracy of TB retransmission.

In combination with some embodiments of the first aspect, in some embodiments, the method further includes:
in a case of the link transmission being a downlink (DL) multi-TB transmission, determining a sub-frame where a terminal receives a last repetition of a last TB as a starting time of the HARQ RTT timer, in which the HARQ RTT timer is a timer corresponding to a DL.

In the above embodiments, during the DL multi-TB transmission, the sub-frame where the terminal receives the last repetition of the last TB may be taken as the starting time of the HARQ RTT timer, which improves an accuracy of determining the starting time of the HARQ RTT timer during the DL multi-TB transmission, and improves an accuracy of DL multi-TB retransmission.

In combination with some embodiments of the first aspect, in some embodiments, the method further includes:
in a case of the link transmission being an uplink (UL) multi-TB transmission, determining a sub-frame where a terminal sends a last repetition of a last TB as a starting time of a UL HARQ RTT timer, in which the UL HARQ RTT timer is a timer corresponding to a UL.

In the above embodiments, during the UL multi-TB transmission, the sub-frame where the terminal sends the last repetition of the last TB may be taken as the starting time of the UL HARQ RTT timer, which improves an accuracy of determining the starting time of the UL HARQ RTT timer during the UL multi-TB transmission, and improves an accuracy of UL multi-TB retransmission.

In combination with some embodiments of the first aspect, in some embodiments, the method further includes:
in a case of the link transmission being a DL single-TB transmission, determining a sub-frame where a terminal receives a last repetition of a TB as a starting time of the HARQ RTT timer, in which the HARQ RTT timer is a timer corresponding to a DL.

In the above embodiments, during the DL single-TB transmission, the sub-frame where the terminal receives the last repetition of the TB is taken as the starting time of the HARQ RTT timer, which improves an accuracy of determining the starting time of the HARQ RTT timer during the DL single-TB transmission, and improves an accuracy of DL single-TB retransmission.

In combination with some embodiments of the first aspect, in some embodiments, the method further includes:
in a case of the link transmission being a UL single-TB transmission, determining a sub-frame where a terminal sends a last repetition of a TB as a starting time of a UL HARQ RTT timer, in which the UL HARQ RTT timer is a timer corresponding to a UL.

In the above embodiments, during the UL single-TB transmission, the sub-frame where the terminal sends the last repetition of the TB is taken as the starting time of the UL HARQ RTT timer, which improves an accuracy of determining the starting time of the UL HARQ RTT timer during the UL single-TB transmission, and improves an accuracy of UL single-TB retransmission.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL single-TB transmission and indicating to enable a HARQ feedback of a HARQ process of the DL single-TB transmission, where the HARQ feedback of the HARQ process is enabled via a radio resource control (RRC) configuration, starting the HARQ RTT timer corresponding to the HARQ process.

In the above embodiments, when the PDCCH indicates the DL single-TB transmission and indicates to enable the HARQ feedback of the HARQ process, and the HARQ feedback of the HARQ process is enabled via the RRC configuration, the HARQ RTT timer corresponding to the HARQ process may be started, which improves an accuracy of starting the HARQ RTT timer, and improves an accuracy of HARQ initiation and improves an accuracy of TB retransmission.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL single-TB transmission and indicating to enable a HARQ feedback of a HARQ process of the DL single-TB transmission, where the HARQ feedback of the HARQ process is not enabled or disabled via an RRC configuration, starting the HARQ RTT timer corresponding to the HARQ process.

In the above embodiments, when the PDCCH indicates the DL single-TB transmission and indicates to enable the HARQ feedback of the HARQ process, and the HARQ feedback of the HARQ process is not enabled or disabled via the RRC configuration, the HARQ RTT timer corresponding to the HARQ process may be started. Therefore, the HARQ RTT timer may be started according to the RRC configuration, which improves an accuracy of starting the HARQ RTT timer, and improves an accuracy of HARQ initiation and improves an accuracy of TB retransmission.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL multi-TB transmission and indicating to enable a HARQ feedback, where the HARQ feedback of a HARQ process corresponding to any TB among DL multi-TBs is enabled via an RRC configuration, starting the HARQ RTT timer of the HARQ process corresponding to the any TB.

In the above embodiments, when the PDCCH indicates the DL multi-TB transmission and indicates to enable the HARQ feedback, and the HARQ feedback of the HARQ processes corresponding to any TB among DL multi-TBs is enabled via the RRC configuration, the HARQ RTT timer corresponding to the HARQ process of the any TB may be started. Therefore, the HARQ RTT timer corresponding to the HARQ process of the any TB is started according to the RRC configuration, which improves an accuracy of starting the HARQ RTT timer, and improves an accuracy of HARQ initiation and improves an accuracy of TB retransmission.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL multi-TB transmission and indicating to enable a HARQ feedback, where the HARQ feedback of a HARQ process corresponding to any TB among DL multi-TBs is not enabled or disabled via an RRC configuration, starting the HARQ RTT timer of the HARQ process corresponding to the any TB.

In the above embodiments, when the PDCCH indicates the DL multi-TB transmission and indicates to enable the HARQ feedback, and the HARQ feedback of the HARQ process corresponding to any TB among DL multi-TBs is not enabled or disabled via the RRC configuration, the HARQ RTT timer of the HARQ process corresponding to the any TB may be started. Therefore, the HARQ RTT timer of the HARQ process corresponding to the any TB is started according to the RRC configuration, which improves an accuracy of starting the HARQ RTT timer, and improves an accuracy of HARQ initiation and improves an accuracy of TB retransmission.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL single-TB transmission and indicating to enable a HARQ feedback of a HARQ process of the DL single-TB transmission, where the HARQ feedback of the HARQ process is disabled via an RRC configuration, not starting the HARQ RTT timer corresponding to the HARQ process.

In the above embodiments, when the PDCCH indicates the DL single-TB transmission and indicates to enable the HARQ feedback of the HARQ process of the DL single-TB transmission, and the HARQ feedback of the HARQ process is disabled via the RRC configuration, the HARQ RTT timer corresponding to the HARQ process may not be started. Therefore, the HARQ RTT timer corresponding to the HARQ process may be not started according to the RRC configuration, which improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL multi-TB transmission and indicating to enable a HARQ feedback, where the HARQ feedback of a HARQ process corresponding to any TB among DL multi-TBs is disabled via an RRC configuration, not starting the HARQ RTT timer of the HARQ process corresponding to the any TB.

In the above embodiments, when the PDCCH indicates the DL multi-TB transmission and indicates to enable the HARQ feedback, and the HARQ feedback of the HARQ process corresponding to any TB among DL multi-TBs is disabled via the RRC configuration, the HARQ RTT timer of the HARQ process corresponding to the any TB may not be started. Therefore, the HARQ RTT timer of the HARQ process corresponding to the any TB may not be started according to the RRC configuration, which improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL single-TB transmission and indicating to disable a HARQ feedback of a HARQ process of the DL single-TB transmission, where the HARQ feedback of the HARQ process is disabled via an RRC configuration, not starting the HARQ RTT timer corresponding to the HARQ process.

In the above embodiments, when the PDCCH indicates to disable the HARQ feedback of the HARQ process of the DL single-TB transmission, and the HARQ feedback of the HARQ process is disabled via the RRC configuration, the HARQ RTT timer corresponding to the HARQ process may not be started, which saves resources for starting the HARQ RTT timer and improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL single-TB transmission and indicating to disable a HARQ feedback of a HARQ process of the DL single-TB transmission, where the HARQ feedback of the HARQ process is enabled via an RRC configuration, not starting the HARQ RTT timer corresponding to the HARQ process.

In the above embodiments, when the PDCCH indicates to disable the HARQ feedback of the HARQ process of the DL single-TB transmission, and the HARQ feedback of the HARQ process is enabled via the RRC configuration, the HARQ RTT timer corresponding to the HARQ process may not be started, which saves resources for starting the HARQ RTT timer and improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL single-TB transmission and indicating to disable a HARQ feedback of a HARQ process of the DL single-TB transmission, where the HARQ feedback of the HARQ process is not enabled or disabled via an RRC configuration, not starting the HARQ RTT timer corresponding to the HARQ process.

In the above embodiments, when the PDCCH indicates to disable the HARQ feedback of the HARQ process of the DL single-TB transmission, and the HARQ feedback of the HARQ process is not enabled or disabled via the RRC configuration, the HARQ RTT timer corresponding to the HARQ process may not be started, which saves resources for starting the HARQ RTT timer and improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL multi-TB transmission and indicating to disable a HARQ feedback, where the HARQ feedback of a HARQ process corresponding to any TB among DL multi-TBs is disabled via an RRC configuration, not starting the HARQ RTT timer of the HARQ process corresponding to the any TB.

In the above embodiments, when the PDCCH indicates to disable the HARQ feedback, and the HARQ feedback of the HARQ process corresponding to any TB among DL multi-TBs is disabled via the RRC configuration, the HARQ RTT timer of the HARQ process corresponding to the any TB may not be started, which saves resources for starting the HARQ RTT timer and improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL multi-TB transmission and indicating to disable a HARQ feedback, where the HARQ feedback of a HARQ process corresponding to any TB among DL multi-TBs is enabled via an RRC configuration, not starting the HARQ RTT timer of the HARQ process corresponding to the any TB.

In the above embodiments, when the PDCCH indicates to disable the HARQ feedback, and the HARQ feedback of the HARQ process corresponding to any TB among DL multi-TBs is enabled via the RRC configuration, the HARQ RTT timer of the HARQ process corresponding to the any TB may not be started, which saves resources for starting the HARQ RTT timer and improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a DL multi-TB transmission and indicating to disable a HARQ feedback, where the HARQ feedback of a HARQ process corresponding to any TB among DL multi-TBs is not enabled or disabled via an RRC configuration, not starting the HARQ RTT timer of the HARQ process corresponding to the any TB.

In the above embodiments, when the PDCCH indicates to disable the HARQ feedback, and the HARQ feedback of the HARQ process corresponding to any TB among DL multi-TBs is not enabled or disabled via the RRC configuration, the HARQ RTT timer of the HARQ process corresponding to the any TB may not be started, which saves resources for starting the HARQ RTT timer and improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a UL single-TB transmission and configuring a HARQ mode of a HARQ process of the UL single-TB transmission to be mode A, starting a UL HARQ RTT timer corresponding to the HARQ process.

In the above embodiments, when the PDCCH indicates the UL single-TB transmission and configuring the HARQ mode of the HARQ process of the UL single-TB transmission to be mode A, the UL HARQ RTT timer corresponding to the HARQ process may be started. Therefore, the HARQ RTT timer corresponding to the HARQ process is started according to a mode configuration, which improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a UL multi-TB transmission and configuring a HARQ mode to be mode A, starting a UL HARQ RTT timer corresponding to a HARQ process of any one of multi-TBs.

In the above embodiments, when the PDCCH indicates the UL multi-TB transmission and configuring the HARQ mode to be mode A, the UL HARQ RTT timer corresponding to the HARQ process of any one of multi-TBs may be started. Therefore, the HARQ RTT timer corresponding to the HARQ process of the any one of multi-TBs is started according to a mode configuration, which improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a UL single-TB transmission and configuring a HARQ mode of a HARQ process of the UL single-TB transmission to be mode B, not starting a UL HARQ RTT timer corresponding to the HARQ process.

In the above embodiments, when the PDCCH indicates the UL single-TB transmission and configuring the HARQ mode of the HARQ process of the UL single-TB transmission as mode B, the UL HARQ RTT timer corresponding to the HARQ process may not be started. Therefore, the HARQ RTT timer corresponding to the HARQ process is not started according to a mode configuration, which improves an accuracy of starting the HARQ RTT timer.

In combination with some embodiments of the first aspect, in some embodiments, in a case of the PDCCH indicating the link transmission, determining, based on the at least one of the HARQ mode configuration or the HARQ feedback configuration of the PDCCH, whether to start the HARQ RTT timer corresponding to the link transmission, includes:
in a case of the PDCCH indicating a UL multi-TB transmission and configuring a HARQ mode to be mode B, not starting a UL HARQ RTT timer corresponding to a HARQ process of any one of multi-TBs.

In the above embodiments, when the PDCCH indicates the UL multi-TB transmission and configuring the HARQ mode as mode B, the UL HARQ RTT timer corresponding to the HARQ process of the any one of multi-TBs may not be started. Therefore, the HARQ RTT timer corresponding to the HARQ process of the any one of multi-TBs is not started according to a mode configuration, which improves an accuracy of starting the HARQ RTT timer.

According to a second aspect, the embodiments of the disclosure provide a method for starting a timer. The method includes:
in a case of a PDCCH indicating a link transmission, sending at least one of a HARQ mode configuration or a HARQ feedback configuration of the PDCCH to a terminal, in which the at least one of the HARQ mode configuration or the HARQ feedback configuration of the PDCCH is used to determine whether to start a HARQ RTT timer corresponding to the link transmission.

In the above embodiment, a starting mechanism of the HARQ RTT timer is provided for the terminal, which may improve an accuracy of starting the HARQ RTT timer, improve an accuracy of HARQ initiation, and improve an accuracy of TB retransmission.

According to a third aspect, the embodiments of the disclosure provide a terminal. The terminal includes:
a processing module, configured to, in a case of a PDCCH indicating a link transmission, determine, based on at least one of a HARQ mode configuration or a HARQ feedback configuration of the PDCCH, whether to start a HARQ RTT timer corresponding to the link transmission.

In the above embodiment, the terminal determines whether to start the HARQ RTT timer according to the at least one of the HARQ mode configuration or the HARQ feedback configuration. A starting mechanism of the HARQ RTT timer may be proved, which may improve an accuracy of starting the HARQ RTT timer, improve an accuracy of HARQ initiation and improve an accuracy of TB retransmission.

According to a fourth aspect, the embodiments of the disclosure provide a network device. The network device includes:
a transceiver module, configured to, in a case of a PDCCH indicating a link transmission, send at least one of a HARQ mode configuration or a HARQ feedback configuration of the PDCCH to a terminal, in which the at least one of the HARQ mode configuration or the HARQ feedback configuration of the PDCCH is used to determine whether to start a HARQ RTT timer corresponding to the link transmission.

In the above embodiment, the network device provides a starting mechanism of the HARQ RTT timer for the terminal, which may improve an accuracy of starting the HARQ RTT timer, improve an accuracy of HARQ initiation and improve an accuracy of TB retransmission.

According to a fifth aspect, the embodiments of the disclosure provide a terminal. The terminal includes:
one or more processors;
in which the terminal is configured to implement the method for starting the timer in the first aspect.

According to a sixth aspect, the embodiments of the disclosure provide a network device. The network device includes:
one or more processors;
in which the network device is configured to implement the method for starting the timer in the second aspect.

According to a seventh aspect, the embodiments of the disclosure provide a communication system. The communication system includes a terminal and a network device. The terminal is configured to implement the method for starting the timer in the first aspect, and the network device is configured to implement the method for starting the timer in the second aspect.

According to an eighth aspect, the embodiments of the disclosure provide a storage medium. The storage medium stores instructions, and when the instructions are executed by a communication device, the communication device is caused to implement the method for starting the timer in the first aspect or the method for starting the timer in the second aspect.

The embodiments of the disclosure provides a method for starting a timer. In some embodiments, "method for starting the timer", "information processing method" and "communication method" are interchangeable. Moreover, "apparatus for starting the timer", "information processing device" and "communication device" are interchangeable. Furthermore, "information processing system" and "communication system" are also interchangeable.

The embodiments of the disclosure are not exhaustive, but only schematic illustrations of some embodiments, and are not taken as specific limitations on the protection scope of the disclosure. Without contradiction, within an embodiment, each step may be implemented as an independent embodiment, and steps may be combined arbitrarily. For example, the solution after removing some steps in the embodiment may also be implemented as an independent embodiment. The steps in the embodiment may be performed in different orders, and implementations in the embodiment may be combined arbitrarily. In addition, the embodiments of the disclosure may also be combined arbitrarily. For example, some or all steps of different embodiments may be combined arbitrarily, and each embodiment may be arbitrarily combined with implementations of other embodiments.

In the embodiments of the disclosure, unless there are special explanations and logical conflicts, terms and/or descriptions of the embodiments are consistent and may refer to each other, and technical features in different embodiments may be combined as a new embodiment according to their inherent logical relations.

The terms used in the embodiments of the disclosure are only for the purpose of describing specific embodiments, and are not used as limitations of the disclosure.

In the embodiments of the disclosure, unless otherwise specified, an element expressed in a singular form via terms such as "a", "an" "the" "the above", "said", "the above described", "this" and so on, is interpreted as that there is "one and only one", "one or more" or "at least one" of the element. For example, when an article, e.g., "a", "an" or "the" in English, is used in translation, the noun after the article is interpreted either in a singular form or in a plural form.

In the embodiments of the disclosure, "a plurality of" refers to "two or more".

In some embodiments, the terms "at least one of", "one or more", "a plurality of" and "multiple" are interchangeable.

In some embodiments, "at least one of A or B", "A and/or B", "in one case A, while in another case B", and "in a case of one case A, while in a case of another case B" may be used in the following technical schemes depends on the specific situation: in some embodiments, A is executed independent of B; in some embodiments, B is executed independent of A; in some embodiments, A or B is selectively executed; and in some embodiments, A and B are both executed. The same applies when there are more branches such as A, B and C.

In some embodiments, "A or B" may be used in the following technical schemes depends on the condition: in some embodiments, A is executed independent of B; in some embodiments, B is executed independent of A; and in some embodiments, A or B is selectively executed. The same applies when there are more branches such as A, B and C.

The prefixes such as "first" and "second" in the embodiments of the disclosure are only used to describe different objects, and the prefix is not intended to limit the position, order, priority, quantity or content of a certain object. The description of the object may refer to the descriptions of the claims or the embodiments, and should not constitute unnecessary limitations because of the use of prefix. For example, when describing a "field", the prefixes "first" and "second" in "first field" and "second field" do not indicate the positions or orders of the two fields, and do not indicate whether the "first field" and "second field" are in the same message or not, nor do they define the sequence of the "first field" and "second field". For another example, when describing a "level", the prefixes "first" and "second" in "first level" and "second level" do not limit the priorities of the levels. Moreover, an ordinal number used to describe an object does not indicate a quantity of the object, and there may be one or more of such object. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", the "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, the terms "in a case of", "in a case of determining", "in the case of", "when", "while", "if" and "assuming" are interchangeable.

In some embodiments, the terms "greater than", "greater than or equal to", "more than" "more than or equal to", "higher than", "higher than or equal to", "no less than", "no lower than" and "above" are interchangeable. Moreover, the terms "less than", "less than or equal to", "lower than", "lower than or equal to", "smaller than", "smaller than or equal to", "no greater than", "no higher than" and "below" are interchangeable.

In some embodiments, the apparatus/device may be interpreted as physical or virtual, and its name is not limited to those listed in the embodiments. In some cases, it is understood as "equipment", "device", "circuit", "network element", "node", "function", "unit", "section", "system", "network", "chip", "chip system", "entity" or "body".

In some embodiments, "network" may be interpreted as a device included in the network, such as an access network (AN) device and a core network (CN) device.

In some embodiments, "AN device" may also be referred to as "radio AN (RAN) device", "base station (BS)", "radio BS" or "fixed station". In some embodiments, it may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier" or "bandwidth part (BWP)".

In some embodiments, "terminal" or "terminal device" may be referred to as user equipment (UE), user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client or client.

In some embodiments, data and information are obtained by means comply with the laws and regulations of the host country.

In some embodiments, data and information are obtained with the consent of users.

In addition, each element, row or column in the tables of the embodiments of the disclosure may be implemented as an independent embodiment, and any combination of element, row and column may be implemented as an independent embodiment.

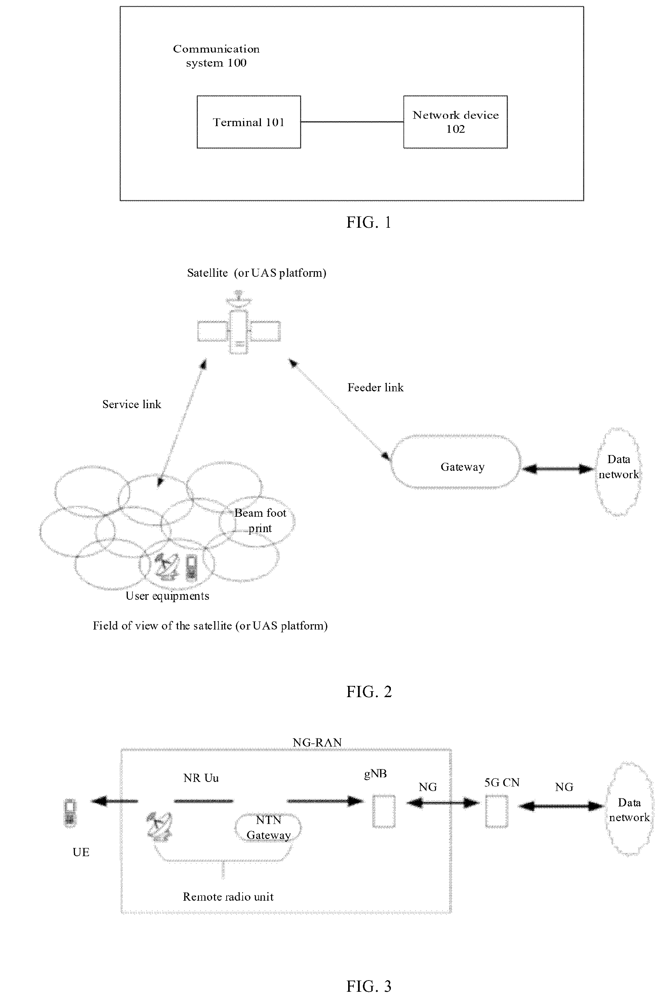

FIG. 1 is a schematic diagram of a communication system according to an embodiment of the disclosure. As illustrated in FIG. 1, a communication system 100 includes a terminal 101 and a network device 102.

In some embodiments, the terminal 101 includes at least one of a mobile phone, a wearable device, an Internet of Things (IoT) device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited thereto.

In some embodiments, the network device 102 includes at least one of an AN device or a CN device.

In some embodiments, the AN device may be a node or a device that connects the terminal to a wireless network, and it includes at least one of an evolved Node B (eNB) in a 5G communication system, a next generation eNB (ng-eNB), a next generation NodeB (gNB), a NodeB (NB), a home NB (HNB), a home evolved NB (HeNB), a wireless backhaul equipment, a radio network controller (RNC), a BS controller (BSC), a base transceiver station (BTS), a base band unit (BBU), a mobile switching center, a BS in a 6G communication system, an Open RAN, a Cloud RAN, a base station in other communication systems, or an access node in a wireless fidelity (Wi-Fi) system, which is not limited thereto.

In some embodiments, the technical solution of the disclosure is applied to the Open RAN. In this case, the interfaces between AN devices or within the AN devices involved in the embodiments of the disclosure may be used as internal interfaces of the Open RAN, and the procedures and information interactions between these internal interfaces are implemented by software or programs.

In some embodiments, the AN device is composed of a central unit (CU) and distributed units (DUs), and "CU" may also be the abbreviation of control unit. The use of the CU-DU structure allows to divide a protocol layer of the AN device, such that some functions of the protocol layer are placed in the CU for centralized control, and some or all of the remaining functions of the protocol layer are distributed in the DUs that are centrally controlled by the CU, which is not limited thereto.

In some embodiments, the CN device may be a device including one or more network elements, or a plurality of devices or groups of devices, each including all or part of the above one or more network elements. The network elements may be virtual or physical. For example, the core network includes at least one of an evolved packet core (EPC), a 5G core network (CN) or a next generation core (NGC).

In some embodiments, the CN device may be a device, including a first network element and a second network element, or a plurality of devices or groups of devices, each including all or part of the first network element and the second network element. The network elements may be virtual or physical. For example, the CN includes at least one of an EPC, a 5G CN or a NGC.

In some embodiments, the first network element may be, for example, a policy control function (PCF).

In some embodiments, the first network element is used to "enable a unified policy framework to manage network behaviors, provide network entities with policy rules for implementation and execution, and access subscription information of a unified data repository (UDR)", and its name is not limited herein.

In some embodiments, the second network element may be, for example, a unified data management (UDM) function.

In some embodiments, the second network element is used for "managing user identities, subscription data and authentication data, and managing user service network element registration", and its name is not limited herein.

In some embodiments, a third network element may be, for example, an authentication server function (AUSF).

In some embodiments, the third network element may be configured to "receive a request from an access and mobility management function (AMF) for authenticating the terminal, and request a key from a UDM and then forward the key sent by the UDM to the AMF for authentication", and its name is not limited herein.

In some embodiments, the third network element may be independent of the CN device.

In some embodiments, the third network element may be part of the CN device.

It should be understood that the communication system described in the embodiments of the disclosure is for the purpose of more clearly illustrating the technical solutions of the embodiments of the disclosure, and does not constitute a limitation on the technical solutions proposed by the embodiments of the disclosure. Those skilled in the art know that with the evolution of system architectures and the emergence of new service scenarios, the technical solutions proposed by the embodiments of the disclosure are equally applicable to similar technical problems.

The following embodiments of the disclosure are applied to the entire or a portion of the communication system 100 shown in FIG. 1, which is not limited herein. The entities in the system shown in FIG. 1 are examples. The communication system may include all or part of the entities in FIG. 1, and may also include entities not shown in FIG. 1. The quantities and forms of these entities are arbitrary, and the entities may be physical or virtual. The connection relationship between entities is illustrated as an example. For example, the entities may or may not be connected, and the entities may be connected by any means, e.g., directly or indirectly, or in a wired manner or wirelessly.

The embodiments of the disclosure may be applied to a long-term evolution (LTE) system, an LTE-Advanced (LTE-A) system, an LTE-Beyond (LTE-B) system, a SUPER 3G system, an IMT-Advanced system, a 4th generation mobile communication system (4G), a 5th generation mobile communication system (5G), a 5G new radio (NR) system, a future radio access (FRA) system, a new-radio access technology (RAT) system, a NR system, a new radio access (NX) system, a future generation radio access (FX) system, a global system for mobile communications (GSM), a CDMA2000, a ultra-mobile broadband (UMB), an IEEE 802.11(Wi-Fi), an IEEE 802.16 (WiMAX), an IEEE 802.20, a ultra-wideband (UWB), a Bluetooth, a public land mobile network (PLMN), a device-to-device (D2D) system, a machine-to-machine (M2M) system, an IoT system, a vehicle-to-everything (V2X) system, systems using other communication methods or their next generation systems. In addition, multiple systems may be combined for applications, such as a combination of the LTE/LTE-A system and 5G.

In some embodiments, in the communication system, non-terrestrial network (NTN) is an important 5G technique, which provides wireless resources via satellites (or unmanned aircrafts) instead of terrestrial BSs. FIG. 2 is a schematic diagram of a wireless connection maintaining system according to an embodiment of the disclosure. As illustrated in FIG. 2, the wireless connection maintaining system includes a UE, a beam foot print, a service link, a satellite, an unmanned aircraft system (UAS) platform, a feeder link, a gateway, a data network and a field of view of the satellite. The satellite may process signals in a transparent transmission mode or a retransmission mode.

In an embodiment of the disclosure, FIG. 3 is a schematic diagram of a transparent transmission mode according to an embodiment of the disclosure. As illustrated in FIG. 3, a NTN terrestrial station sends a signal of the gNB to the satellite, and the satellite converts the signal to a satellite frequency band and then sends the signal to the UE via the satellite frequency band. Except for frequency conversion and signal amplification, the satellite does not demodulate the gNB signal, and the satellite may function similarly a repeater. 5G BS is called the gNB, which provides the UE with nodes on an NR user plane and a control plane, and connect to a 5G core (5GC) via an NG interface.

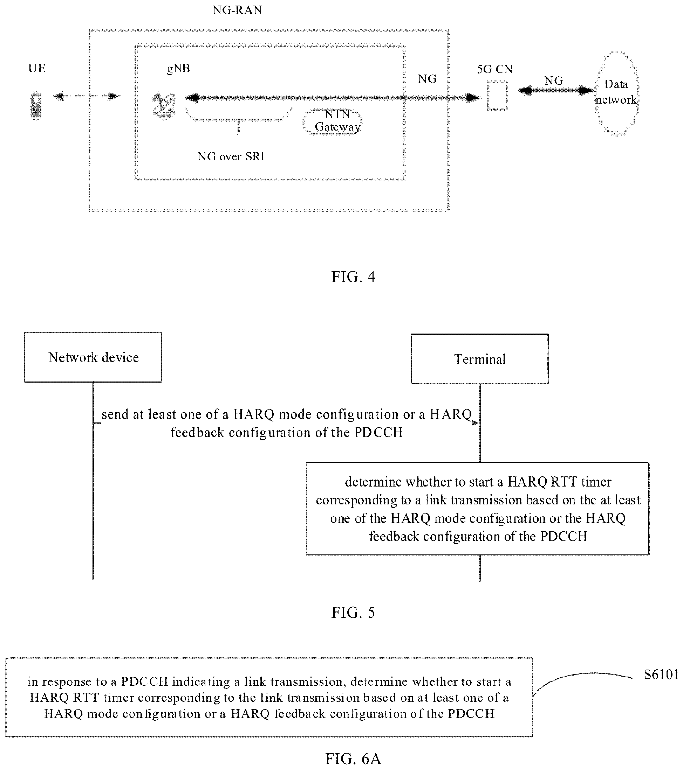

In an embodiment of the disclosure, FIG. 4 is a schematic diagram of a retransmission mode according to an embodiment of the disclosure. As illustrated in FIG. 4, after the NTN terrestrial station sends the gNB signal to the satellite, the satellite first demodulates the signal and decodes the signal, and then re-encodes and re-modulates the signal (i.e., regeneration process) and sends the regenerated signal via the satellite frequency band.

In an embodiment of the disclosure, Table 1 shows satellite altitudes, orbits and satellite coverage ranges of a typical NTN network provided by the embodiment of the disclosure.

**Table 1**

| Platforms | Altitude range | Orbit | Typical beam footprint size |
|---|---|---|---|
| Low-earth orbit (LEO) satellite | 300-1500km | Circular around the earth | 100-1000km |
| Medium-earth orbit (MEO) satellite | 7000-25000km | | 100-1000km |
| Geostationary earth orbit (GEO) satellite | 35786km | Notional station keeping position fixed in terms of elevation/azimuth with respect to a given earth point | 200-3500km |
| UAS platform (including high-altitude platform station (HAPS)) | 8-50km (20 km for HAPS) | | 5-200km |
| High elliptical orbit (HEO) satellite | 400-50000km | Elliptical around the earth | 200-3500km |

According to some embodiments, in a single TB scenario, for a HARQ process with HARQ feedback disabled configured via RRC, if downlink control information (DCI) indicates "HARQ feedback enable", NBIoT UE does not wait for RRT+3ms before monitoring narrowband PDCCH (NPDCCH) for the same HARQ process (or monitoring any NPDCCH for a configuration of a single HARQ process), thus having a certain impact on the HARQ RTT timer. A main impact is that even where the DCI indicates "HARQ feedback enable", its purpose is not to enable scheduling-based HARQ retransmission, but only to facilitate the network device in adjusting a scheduling strategy based on the HARQ feedback. Therefore, in this case, the HARQ RTT timer shall not be started to monitor retransmission scheduling. In addition, for a multi-TB scenario, a working mechanism of the HARQ RTT timer also needs to be considered for UL HARQ.

A method for starting a timer, an apparatus, a device and a storage medium provided by the embodiments of the disclosure are described in detail with reference to the accompanying drawings.

FIG. 5 is an interactive schematic diagram of a method for starting a timer according to an embodiment of the disclosure. As illustrated in FIG. 5, the method includes the following steps.

At step S5101, in a case of a PDCCH indicating a link transmission, the network device 102 sends at least one of a HARQ mode configuration or a HARQ feedback configuration of the PDCCH to the terminal 101.

At step S5102, the terminal 101 determines, based on at least one of the HARQ mode configuration or the HARQ feedback configuration of the PDCCH, whether to start a HARQ RTT timer corresponding to the link transmission.

In some embodiments, the PDCCH indicating the link transmission may refer to, for example, the PDCCH indicating a transmission type of the link transmission. For example, the transmission type may be a UL transmission type, or the transmission type may be a DL transmission type.

In some embodiments, data transmissions on a physical downlink shared channel (PDSCH) and a physical uplink shared channel (PUSCH) may both be based on a TB transmission.

In some embodiments, the terms "type" and "parameter" are interchangeable.

For example, in an embodiment of the disclosure, the terminal 101 may determine, based on the HARQ feedback configuration, whether to start the HARQ RTT timer corresponding to a DL transmission.

For example, in an embodiment of the disclosure, the terminal 101 may determine, based on the HARQ mode configuration, whether to start the HARQ RTT timer corresponding to a UL single-TB transmission.

For example, in an embodiment of the disclosure, the terminal 101 may determine, based on the HARQ mode configuration or the HARQ feedback configuration of the PDCCH, whether to start the HARQ RTT timer corresponding to the link transmission.

At step S5103, in a case of the link transmission being a DL multi-TB transmission, the terminal 101 determines a sub-frame where the terminal receives a last repetition of a last TB as a starting time of the HARQ RTT timer, in which the HARQ RTT timer is a timer corresponding to a DL.

In some embodiments, the terms "send", "release", "report", "issue", "transmit", "two-way transmit" and "send and/or receive" are interchangeable.

In some embodiments, "obtain", "acquire", "collect", "receive", "transmit", "two-way transmit" and "send and/or receive" are interchangeable, which may be interpreted as receiving from another entity, obtaining from a protocol, obtaining from a higher layer, processing by itself, or implementing automatically.

In some embodiments, the terms "certain", "preset", "predefined", "set", "indicated", "specific", "any" and "first" are interchangeable. For example, "certain A", "preset A", "predefined A", "set A", "indicated A", "specific A", "any A" and "first A" may be interpreted as A pre-defined in a protocol, as A obtained via a setting, a configuration or an indication, or as specific A, a certain A, any A or first A, which is not limited herein.

In some embodiments, the terms "DCI", "DL assignment", "DL DCI", "UL grant" and "UL DCI" are interchangeable.

In some embodiments, terms "moment", "time point", "time" and "time position" are interchangeable, and terms "duration", "time period", "time window", "window" and "time" are also interchangeable.

In some embodiments, terms "frame", "radio frame", "subframe", "slot", "sub-slot", "mini-slot", "symbol", "symbol" and "transmission time interval (TTI)" are interchangeable.

At step S5104, in a case of the link transmission being a UL multi-TB transmission, the terminal 101 determines a sub-frame where the terminal sends a last repetition of a last TB as a starting time of a UL HARQ RTT timer, in which the UL HARQ RTT timer is a timer corresponding to a UL.

In some embodiments, the terms "uplink", "UL" and "physical UL" are interchangeable. Moreover, the terms "downlink", "DL" and "physical DL" are interchangeable. In addition, the terms "side", "sidelink", "side communication", "sidelink communication", "direct", "direct link", "direct communication" and "direct link communication" are also interchangeable.

At step S5105, in a case of the link transmission being a DL single-TB transmission, the terminal 101 determines a sub-frame where the terminal receives a last repetition of a TB as a starting time of the HARQ RTT timer, in which the HARQ RTT timer is a timer corresponding to a DL.

At step S5106, in a case of the link transmission being a UL single-TB transmission, the terminal 101 determines a sub-frame where the terminal sends a last repetition of a TB as a starting time of a UL HARQ RTT timer, in which the UL HARQ RTT timer is a timer corresponding to a UL.

At step S5107, in a case of the PDCCH indicating a DL single-TB transmission and indicating to enable a HARQ feedback of a HARQ process of the DL single-TB transmission, where the HARQ feedback of the HARQ process is enabled via an RRC configuration, the terminal 101 starts the HARQ RTT timer corresponding to the HARQ process.

At step S5108, in a case of the PDCCH indicating a DL single-TB transmission and indicating to enable a HARQ feedback of a HARQ process of the DL single-TB transmission, where the HARQ feedback of the HARQ process is not enabled or disabled via an RRC configuration, the terminal 101 starts the HARQ RTT timer corresponding to the HARQ process.

At step S5109, in a case of the PDCCH indicating a DL multi-TB transmission and indicating to enable a HARQ feedback, where the HARQ feedback of a HARQ process corresponding to any TB among DL multi-TBs is enabled via an RRC configuration, the terminal 101 starts the HARQ RTT timer of the HARQ process corresponding to the any TB.

At step S5110, in a case of the PDCCH indicating a DL multi-TB transmission and indicating to enable a HARQ feedback, where the HARQ feedback of a HARQ process corresponding to any TB among DL multi-TBs is not enabled or disabled via an RRC configuration, the terminal 101 starts the HARQ RTT timer of the HARQ process corresponding to the any TB.

At step S5111, in a case of the PDCCH indicating a DL single-TB transmission and indicating to enable a HARQ feedback of a HARQ process of the DL single-TB transmission, where the HARQ feedback of the HARQ process is disabled via an RRC configuration, the terminal 101 does not start the HARQ RTT timer corresponding to the HARQ process.

At step S5112, in a case of the PDCCH indicating a DL multi-TB transmission and indicating to enable a HARQ feedback, where the HARQ feedback of a HARQ process corresponding to any TB among DL multi-TBs is disabled via an RRC configuration, the terminal 101 does not start the HARQ RTT timer of the HARQ process corresponding to the any TB.

At step S5113, in a case of the PDCCH indicating a DL single-TB transmission and indicating to disable a HARQ feedback of a HARQ process of the DL single-TB transmission, where the HARQ feedback of the HARQ process is disabled via an RRC configuration, the terminal 101 does not start the HARQ RTT timer corresponding to the HARQ process.

At step S5114, in a case of the PDCCH indicating a DL single-TB transmission and indicating to disable a HARQ feedback of a HARQ process of the DL single-TB transmission, where the HARQ feedback of the HARQ process is enabled via an RRC configuration, the terminal 101 does not start the HARQ RTT timer corresponding to the HARQ process.

At step S5115, in a case of the PDCCH indicating a DL single-TB transmission and indicating to disable a HARQ feedback of a HARQ process of the DL single-TB transmission, where the HARQ feedback of the HARQ process is not enabled or disabled via an RRC configuration, the terminal 101 does not start the HARQ RTT timer corresponding to the HARQ process.

At step S5116, in a case of the PDCCH indicating a DL multi-TB transmission and indicating to disable a HARQ feedback, where the HARQ feedback of a HARQ process corresponding to any TB among DL multi-TBs is disabled via an RRC configuration, the terminal 101 does not start the HARQ RTT timer of the HARQ process corresponding to the any TB.

At step S5117, in a case of the PDCCH indicating a DL multi-TB transmission and indicating to disable a HARQ feedback, where the HARQ feedback of a HARQ process corresponding to any TB among DL multi-TBs is enabled via an RRC configuration, the terminal 101 does not start the HARQ RTT timer of the HARQ process corresponding to the any TB.

At step S5118, in a case of the PDCCH indicating a DL multi-TB transmission and indicating to disable a HARQ feedback, where the HARQ feedback of a HARQ process corresponding to any TB among DL multi-TBs is not enabled or disabled via an RRC configuration, the terminal 101 does not start the HARQ RTT timer of the HARQ process corresponding to the any TB.

At step S5119, in a case of the PDCCH indicating a UL single-TB transmission and configuring a HARQ mode of a HARQ process of the UL single-TB transmission to be mode A, the terminal 101 starts a UL HARQ RTT timer corresponding to the HARQ process.

In some embodiments, the HARQ mode may include, for example, mode A and mode B. The mode A may refer to allowing scheduling of the HARQ process after one HARQ RTT has elapsed since the last scheduling. The mode B may refer to allowing scheduling of the HARQ process before one HARQ RTT has elapsed since the last scheduling.

At step S5120, in a case of the PDCCH indicating a UL multi-TB transmission and configuring a HARQ mode to be mode A, the terminal 101 starts a UL HARQ RTT timer corresponding to a HARQ process of any one of multi-TBs.

At step S5121, in a case of the PDCCH indicating a UL single-TB transmission and configuring a HARQ mode of a HARQ process of the UL single-TB transmission to be mode B, the terminal 101 does not start a UL HARQ RTT timer corresponding to the HARQ process.

At step S5122, in a case of the PDCCH indicating a UL multi-TB transmission and configuring a HARQ mode to be mode B, the terminal 101 does not start a UL HARQ RTT timer corresponding to a HARQ process of any one of multi-TBs.

At step S5123, the network device 102 sends an RRC configuration to the terminal 101. For example, the network device 102 sends an RRC message to the terminal 101, and the RRC message is used to configure the terminal.

The method according to the embodiment of the disclosure may include at least one of steps S5101-S5123. For example, step S5101 may be implemented as an independent embodiment, step S5103 may be implemented as an independent embodiment, steps S5101-S5103 may be implemented as an independent embodiment, and steps S5101-S5103 and step S5105 may be implemented as an independent embodiment, which is not limited herein.

In some embodiments, steps S5102-S5103 may be performed in a reverse order or simultaneously, and steps S5102 and S5104 may be performed in a reverse order or simultaneously.

In some embodiments, steps S5103-S5122 are optional, and one or more of these steps may be omitted or replaced in different embodiments.

In some embodiments, reference may be made to other implementations described before or after the description of FIG. 5.

FIG. 6A is a flowchart of a method for starting a timer according to an embodiment of the disclosure. As illustrated in FIG. 6A, the embodiment of the disclosure involves a method for starting a timer, and the method includes the following steps.

At step S6101, in a case of a PDCCH indicating a link transmission, it is determined, based on at least one of a HARQ mode configuration or a HARQ feedback configuration of the PDCCH, whether to start a HARQ RTT timer corresponding to the link transmission.

In some embodiments, in a case of the PDCCH indicating the link transmission, it is determined whether to start the HARQ RTT timer corresponding to the link transmission based on the HARQ mode configuration of the PDCCH.

In some embodiments, in a case of the PDCCH indicating the link transmission, it is determined whether to start the HARQ RTT timer corresponding to the link transmission based on the HARQ feedback configuration of the PDCCH.

In an embodiment of the disclosure, the HARQ RTT timer refers to a timer used for retransmission scheduling. When the HARQ RTT timer reaches a fixed duration, retransmission may be started.

In some embodiments, the HARQ RTT timer corresponds to a link. For example, a UL corresponds to a UL HARQ RTT timer, and a DL corresponds to a HARQ RTT timer. The HARQ RTT timer does not refer to a fixed timer. For example, when a timing duration corresponding to the HARQ RTT timer changes, the HARQ RTT timer changes accordingly. For example, different links correspond to different HARQ RTT timers.

In some embodiments, a HARQ mode includes mode A and mode B.

For example, in an embodiment of the disclosure, the PDCCH indicating the link transmission may refer to, for example, the PDCCH indicating a UL transmission. The PDCCH indicating the link transmission may refer to, for example, the PDCCH indicating a DL transmission.

In some embodiments, the at least one of the HARQ mode configuration or the HARQ feedback configuration may, for example, be sent to the terminal at the same time as the link transmission indicated by the PDCCH.

In some embodiments, the terminal 101 may receive the at least one of the HARQ mode configuration or the HARQ feedback configuration sent by the network device 102, or may obtain the at least one of the HARQ mode configuration or the HARQ feedback configuration via processing.

In some embodiments, the link transmission indicated by the PDCCH and the at least one of the HARQ mode configuration or the HARQ feedback configuration may be obtained simultaneously or respectively, which is not limited in the embodiments of the disclosure.

At step S6102, in a case of the link transmission being a DL multi-TB transmission, a sub-frame where a terminal receives a last repetition of a last TB is determined as a starting time of the HARQ RTT timer, in which the HARQ RTT timer is a timer corresponding to a DL.

The implementations of step S6102 may refer to the implementations of step S5103 in FIG. 5 and other related parts in the embodiment of FIG. 5, which is not repeated herein.

In some embodiments of the disclosure, the terminal may determine that the sub-frame where the terminal receives the last repetition of the last TB is the starting time of the HARQ RTT timer.

The HARQ RTT timer is a timer corresponding to the DL. A timing duration of the HARQ RTT timer may be obtained by the terminal 101 via a protocol, or obtained by the terminal 101 from one or more upper layers, or obtained by the terminal 101 via processing.

At step S6103, in a case of the link transmission being a UL multi-TB transmission, a sub-frame where the terminal sends a last repetition of a last TB is determined as a starting time of a UL HARQ RTT timer, in which the UL HARQ RTT timer is a timer corresponding to a UL.

The implementations of step S6103 may refer to the implementations of step S5104 in FIG. 5 and other related parts in the embodiment of FIG. 5, which is not repeated herein.

In some embodiments of the disclosure, the terminal may determine that the subframe where the terminal sends the last repetition of the last TB is the starting time of the UL HARQ RTT timer.

At step S6104, in a case of the link transmission being a DL single-TB transmission, a sub-frame where the terminal receives a last repetition of a TB is determined as a starting time of the HARQ RTT timer, in which the HARQ RTT timer is a timer corresponding to a DL.

The implementations of step S6104 may refer to the implementations of step S5105 in FIG. 5 and other related parts in the embodiment of FIG. 5, which is not repeated herein.

In some embodiments of the disclosure, the terminal may determine that the subframe where the terminal receives the last repetition of the TB is the starting time of the HARQ RTT timer.

At step S6105, in a case of the link transmission being a UL single-TB transmission, a sub-frame where the terminal sends a last repetition of a TB is determined as a starting time of a UL HARQ RTT timer, in which the UL HARQ RTT timer is a timer corresponding to a UL.

The implementations of step S6105 may refer to the implementations of step S5106 in FIG. 5 and other related parts in the embodiment of FIG. 5, which is not repeated herein.

In some embodiments of the disclosure, the terminal may determine that the subframe where the terminal sends the last repetition of the TB is the starting time of the UL HARQ RTT timer.

At step S6106, in a case of the PDCCH indicating a DL single-TB transmission and indicating to enable a HARQ feedback of a HARQ process of the DL single-TB transmission, where the HARQ feedback of the HARQ process is enabled via an RRC configuration, the HARQ RTT timer corresponding to the HARQ process is started.

The implementations of step S6106 may refer to the implementations of step S5107 in FIG. 5 and other related parts in the embodiment of FIG. 5, which is not repeated herein.

At step S6107, in a case of the PDCCH indicating a DL single-TB transmission and indicating to enable a HARQ feedback of a HARQ process of the DL single-TB transmission, where the HARQ feedback of the HARQ process is not enabled or disabled via an RRC configuration, the HARQ RTT timer corresponding to the HARQ process may is started.

The implementations of step S6107 may refer to the implementations of step S5108 in FIG. 5 and other related parts in the embodiment of FIG. 5, which is not repeated herein.

In some embodiments, in a case of the PDCCH indicating the DL single-TB transmission and indicating to enable the HARQ feedback of the HARQ process of the DL single-TB transmission, where the HARQ feedback of the HARQ process is not enabled or disabled via the RRC configuration, the HARQ RTT timer corresponding to the HARQ process is started.

At step S6108, in a case of the PDCCH indicating a DL multi-TB transmission and indicating to enable a HARQ feedback, where the HARQ feedback of a HARQ process corresponding to any TB among DL multi-TBs is enabled via an RRC configuration, the HARQ RTT timer of the HARQ process corresponding to the any TB is started.

The implementations of step S6108 may refer to the implementations of step S5109 in FIG. 5 and other related parts in the embodiment of FIG. 5, which is not repeated herein.

In some embodiments, one TB may correspond to one HARQ process, and one HARQ process may correspond to one HARQ RTT timer.

At step S6109, in a case of the PDCCH indicating a DL multi-TB transmission and indicating to enable a HARQ feedback, where the HARQ feedback of a HARQ process corresponding to any TB among DL multi-TBs is not enabled or disabled via an RRC configuration, the HARQ RTT timer of the HARQ process corresponding to the any TB is started.

The implementations of step S6109 may refer to the implementations of step S5110 in FIG. 5 and other related parts in the embodiment of FIG. 5, which is not repeated herein.

In some embodiments, in a case of the PDCCH indicating the DL multi-TB transmission and indicating to enable the HARQ feedback, where the HARQ feedback of the HARQ process corresponding to any TB among DL multi-TBs is not enabled or disabled via the RRC configuration, the HARQ RTT timer of the HARQ process corresponding to the any TB is started.

At step S6110, in a case of the PDCCH indicating a DL single-TB transmission and indicating to enable a HARQ feedback of a HARQ process of the DL single-TB transmission, where the HARQ feedback of the HARQ process is disabled via an RRC configuration, the HARQ RTT timer corresponding to the HARQ process is not started.

The implementations of step S6110 may refer to the implementations of step S5111 in FIG. 5 and other related parts in the embodiment of FIG. 5, which is not repeated herein.

At step S6111, in a case of the PDCCH indicating a DL multi-TB transmission and indicating to enable a HARQ feedback, where the HARQ feedback of a HARQ process corresponding to any TB among DL multi-TBs is disabled via an RRC configuration, the HARQ RTT timer of the HARQ process corresponding to the any TB is not started.

The implementations of step S6111 may refer to the implementations of step S5112 in FIG. 5 and other related parts in the embodiment of FIG. 5, which is not repeated herein.

At step S6112, in a case of the PDCCH indicating a DL single-TB transmission and indicating to disable a HARQ feedback of a HARQ process of the DL single-TB transmission, where the HARQ feedback of the HARQ process is disabled via an RRC configuration, the HARQ RTT timer corresponding to the HARQ process is not started.

The implementations of step S6112 may refer to the implementations of step S5113 in FIG. 5 and other related parts in the embodiment of FIG. 5, which is not repeated herein.

At step S6113, in a case of the PDCCH indicating a DL single-TB transmission and indicating to disable a HARQ feedback of a HARQ process of the DL single-TB transmission, where the HARQ feedback of the HARQ process is enabled via an RRC configuration, the HARQ RTT timer corresponding to the HARQ process is not started.

The implementations of step S6113 may refer to the implementations of step S5114 in FIG. 5 and other related parts in the embodiment of FIG. 5, which is not repeated herein.

At step S6114, in a case of the PDCCH indicating a DL single-TB transmission and indicating to disable a HARQ feedback of a HARQ process of the DL single-TB transmission, where the HARQ feedback of the HARQ process is not enabled or disabled via an RRC configuration, the HARQ RTT timer corresponding to the HARQ process is not started.

The implementations of step S6114 may refer to the implementations of step S5115 in FIG. 5 and other related parts in the embodiment of FIG. 5, which is not repeated herein.

At step S6115, in a case of the PDCCH indicating a DL multi-TB transmission and indicating to disable a HARQ feedback, where the HARQ feedback of a HARQ process corresponding to any TB among DL multi-TBs is disabled via an RRC configuration, the HARQ RTT timer of the HARQ process corresponding to the any TB is not started.

The implementations of step S6115 may refer to the implementations of step S5116 in FIG. 5 and other related parts in the embodiment of FIG. 5, which is not repeated herein.

At step S6116, in a case of the PDCCH indicating a DL multi-TB transmission and indicating to disable a HARQ feedback, where the HARQ feedback of a HARQ process corresponding to any TB among DL multi-TBs is enabled via an RRC configuration, the HARQ RTT timer of the HARQ process corresponding to the any TB is not started.

The implementations of step S6116 may refer to the implementations of step S5117 in FIG. 5 and other related parts in the embodiment of FIG. 5, which is not repeated herein.

At step S6117, in a case of the PDCCH indicating a DL multi-TB transmission and indicating to disable a HARQ feedback, where the HARQ feedback of a HARQ process corresponding to any TB among DL multi-TBs is not enabled or disabled via an RRC configuration, the HARQ RTT timer of the HARQ process corresponding to the any TB is not started.

The implementations of step S6117 may refer to the implementations of step S5118 in FIG. 5 and other related parts in the embodiment of FIG. 5, which is not repeated herein.

At step S6118, in a case of the PDCCH indicating a UL single-TB transmission and configuring a HARQ mode of a HARQ process of the UL single-TB transmission to be mode A, a UL HARQ RTT timer corresponding to the HARQ process is started.

The implementations of step S6118 may refer to the implementations of step S5119 in FIG. 5 and other related parts in the embodiment of FIG. 5, which is not repeated herein.

At step S6119, in a case of the PDCCH indicating a UL multi-TB transmission and configuring a HARQ mode to be mode A, a UL HARQ RTT timer corresponding to a HARQ process corresponding to any one of multi-TBs is started.

The implementations of step S6119 may refer to the implementations of step S5120 in FIG. 5 and other related parts in the embodiment of FIG. 5, which is not repeated herein.

At step S6120, in a case of the PDCCH indicating a UL single-TB transmission and configuring a HARQ mode of a HARQ process of the UL single-TB transmission to be mode B, a UL HARQ RTT timer corresponding to the HARQ process is not started.

The implementations of step S6120 may refer to the implementations of step S5121 in FIG. 5 and other related parts in the embodiment of FIG. 5, which is not repeated herein.

At step S6121, in a case of the PDCCH indicating a UL multi-TB transmission and configuring a HARQ mode to be mode B, a UL HARQ RTT timer corresponding to a HARQ process corresponding to any one of multi-TBs is not started.

The implementations of step S6121 may refer to the implementations of step S5122 in FIG. 5 and other related parts in the embodiment of FIG. 5, which is not repeated herein.

The method according to the embodiment of the disclosure may include at least one of steps S6101-S6121. For example, step S6101 may be implemented as an independent embodiment, step S6103 may be implemented as an independent embodiment, steps S6101-S6102 may be implemented as an independent embodiment, and steps S6101-S6102 and step S6104 may be implemented as an independent embodiment, which is not limited herein.

In some embodiments, steps S6102-S6103 may be performed in a reverse order or simultaneously, and steps S6102 and S6104 may be performed in a reverse order or simultaneously.

In some embodiments, steps S6102-S6121 are optional, and one or more of these steps may be omitted or replaced in different embodiments.

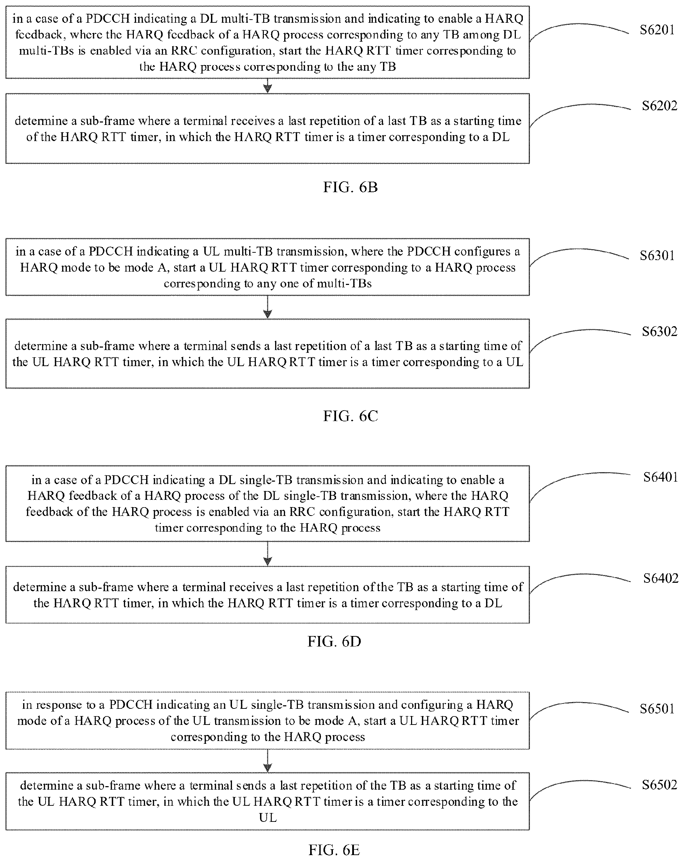

In some embodiments, reference can be made to other implementations described before or after the description of FIG. 6.

FIG. 6B is a flowchart of a method for starting a timer according to an embodiment of the disclosure. As illustrated in FIG. 6B, the embodiment of the disclosure provides a method for starting a timer, and the method includes the following steps.

At step S6201, in a case of a PDCCH indicating a DL multi-TB transmission and indicating to enable a HARQ feedback, where the HARQ feedback of a HARQ process corresponding to any TB among DL multi-TBs is enabled via an RRC configuration, the HARQ RTT timer of the HARQ process corresponding to the TB is started.

At step S6202, a sub-frame where a terminal receives a last repetition of a last TB is determined as a starting time of the HARQ RTT timer, in which the HARQ RTT timer is a timer corresponding to a DL.

The implementations of step S6201 may refer to the implementations of step S5109 in FIG. 5, step S6108 in FIG. 6A, and other related parts of the embodiments involved in FIG. 5 and FIG. 6A, which is not repeated herein.

The method according to the embodiment of the disclosure may include at least one of step S6201 or step S6202. For example, step S6201 may be implemented as an independent embodiment, step S6202 may be implemented as an independent embodiment, and steps S6201 and S6202 may be implemented as an independent embodiment, which is not limited thereto.

In some embodiments, step S6202 is optional, and one or more of these steps may be omitted or replaced in different embodiments.

In an embodiment of the disclosure, step S6202 is combined with step S5110 of FIG. 5, and step S6202 is combined with step S6109 of FIG. 6A.

FIG. 6C is a flowchart of a method for starting a timer according to an embodiment of the disclosure. As illustrated in FIG. 6C, the embodiment of the disclosure provides a method for starting a timer, and the method includes the following steps.

At step S6301, in a case of a PDCCH indicating a UL multi-TB transmission, where the PDCCH configures a HARQ mode to be mode A, a UL HARQ RTT timer corresponding to a HARQ process corresponding to any one of multi-TBs is started.

At step S6302, a sub-frame where a terminal sends a last repetition of a last TB is determined as a starting time of the UL HARQ RTT timer, in which the UL HARQ RTT timer is a timer corresponding to the UL.

The implementations of step S6301 may refer to the implementations of step S5120 in FIG. 5, step S6119 in FIG. 6A, and other related parts of the embodiments involved in FIG. 5 and FIG. 6A, which is not repeated herein.

The method according to the embodiment of the disclosure may include at least one of step S6301 or step S6302. For example, step S6301 may be implemented as an independent embodiment, step S6302 may be implemented as an independent embodiment, and steps S6301 and S6302 may be implemented as an independent embodiment, which is not limited thereto.

In some embodiments, step S6302 is optional, and one or more of these steps may be omitted or replaced in different embodiments.

FIG. 6D is a flowchart of a method for starting a timer according to an embodiment of the disclosure. As illustrated in FIG. 6D, the embodiment of the disclosure provides a method for starting a timer, and the method includes the following steps.

At step S6401, in a case of a PDCCH indicating a DL single-TB transmission and indicating to enable a HARQ feedback of a HARQ process of the DL single-TB transmission, where the HARQ feedback of the HARQ process is enabled via an RRC configuration, the HARQ RTT timer corresponding to the HARQ process is started.

At step S6402, a sub-frame where a terminal receives a last repetition of the TB is determined as a starting time of the HARQ RTT timer, in which the HARQ RTT timer is a timer corresponding to the DL.

The implementations of step S6401 may refer to the implementations of step S5120 in FIG. 5, step S6121 in FIG. 6A, and other related parts of the embodiments involved in FIG. 5 and FIG. 6A, which is not repeated herein.

The method according to the embodiment of the disclosure may include at least one of step S6401 or step S6402. For example, step S6401 may be implemented as an independent embodiment, step S6402 may be implemented as an independent embodiment, and steps S6401 and S6402 may be implemented as an independent embodiment, which is not limited thereto.

In some embodiments, step S6402 is optional, and one or more of these steps may be omitted or replaced in different embodiments.

In an embodiment of the disclosure, step S6402 may be combined with step S5108 of FIG. 5, or step S6402 may be combined with step S6107 of FIG. 6A.

FIG. 6E is a flowchart of a method for starting a timer according to an embodiment of the disclosure. As illustrated in FIG. 6E, the embodiment of the disclosure provides a method for starting a timer, and the method includes the following steps.

At step S6501, in a case of a PDCCH indicating a UL single-TB transmission, where the PDCCH configures a HARQ mode of a HARQ process of the UL single-TB transmission to be mode A, a UL HARQ RTT timer corresponding to the HARQ process is started.

At step S6502, a sub-frame where a terminal sends a last repetition of the TB is determined as a starting time of the UL HARQ RTT timer, in which the UL HARQ RTT timer is a timer corresponding to the UL.

The implementations of step S6501 may refer to the implementations of step S5119 in FIG. 5, step S6118 in FIG. 6A, and other related parts of the embodiments involved in FIG. 5 and FIG. 6A, which is not repeated herein.

The method according to the embodiment of the disclosure may include at least one of step S6501 or step S6502. For example, step S6501 may be implemented as an independent embodiment, step S6502 may be implemented as an independent embodiment, and steps S6501 and S6502 may be implemented as an independent embodiment, which is not limited thereto.

In some embodiments, step S6502 is optional, and one or more of these steps may be omitted or replaced in different embodiments.

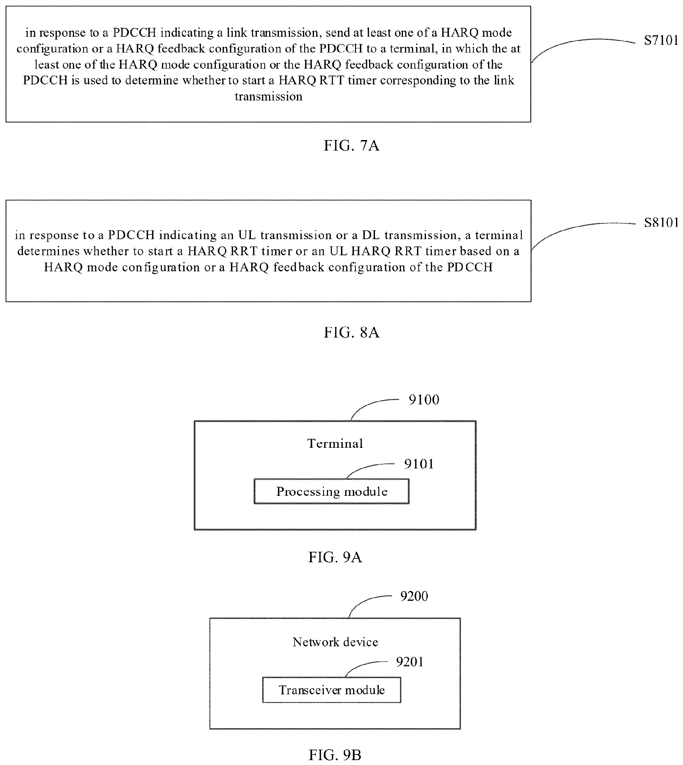

FIG. 7A is a flowchart of a method for starting a timer according to an embodiment of the disclosure. As illustrated in FIG. 7A, the embodiment of the disclosure provides a method for starting a timer, and the method includes the following steps.

At step S7101, in a case of a PDCCH indicating a link transmission, at least one of a HARQ mode configuration or a HARQ feedback configuration of the PDCCH is sent to a terminal, in which the at least one of the HARQ mode configuration or the HARQ feedback configuration of the PDCCH is used to determine whether to start a HARQ RTT timer corresponding to the link transmission.

In some embodiments, the network device 102 sends the at least one of the HARQ mode configuration or the HARQ feedback configuration to the terminal 101, and it may also send the at least one of the HARQ mode configuration or the HARQ feedback configuration to other devices, which is not limited herein.

For example, in an embodiment of the disclosure, the at least one of the HARQ mode configuration or the HARQ feedback configuration is used for the terminal 101 to determine whether to start the HARQ RTT timer corresponding to the link transmission. Its implementations may refer to the implementations of step S5101 in FIG. 5 and other related parts in the embodiment of FIG. 5, which is not repeated herein.

At step S7102, in an embodiment of the disclosure, the network device 102 sends an RRC configuration to the terminal 101.

The method according to the embodiment of the disclosure may include at least one of step S7101 or step S7102. For example, step S7101 may be implemented as an independent embodiment, step S7102 may be implemented as an independent embodiment, and steps S7101 and S7102 may be implemented as an independent embodiment, which is not limited thereto.

In some embodiments, steps S7101 and S7102 may be performed in a reverse order or simultaneously.

In some embodiments, step S7102 is optional, and one or more of these steps may be omitted or replaced in different embodiments.

FIG. 8A is a flowchart of a method for starting a timer according to an embodiment of the disclosure. As illustrated in FIG. 8A, the embodiment of the disclosure provides a method for starting a timer, and the method includes the following steps.

At step S8101, in a case of a PDCCH indicating a UL transmission or a DL transmission, a terminal determines whether to start a HARQ RTT timer or a UL HARQ RTT timer based on a HARQ mode configuration or a HARQ feedback configuration of the PDCCH.

In some embodiments, for a DL multi-TB transmission, a starting time of a corresponding HARQ RTT timer is a sub-frame where the terminal receives a last repetition of a last TB.

In some embodiments, for a UL multi-TB transmission, a starting time of a corresponding UL HARQ RTT timer is a sub-frame where the terminal sends a last repetition of a last TB.

In some embodiments, for a DL single-TB transmission, a starting time of a corresponding HARQ RTT timer is a sub-frame where the terminal receives a last repetition of the TB.

In some embodiments, for a UL single TB transmission, a starting time of a corresponding HARQ RTT timer is a sub-frame where the terminal sends a last repetition of the TB.

At step S8102, in a case of the PDCCH indicating a DL single-TB transmission and indicating to enable a HARQ feedback of a HARQ process of the DL single-TB transmission, where the HARQ feedback of the HARQ process is enabled via an RRC configuration, or the HARQ feedback is not enabled or disabled (i.e., the HARQ feedback is neither enabled nor disabled) via an RRC configuration, the terminal starts a HARQ RTT timer corresponding to the HARQ process.

At step S8103, in a case of the PDCCH indicating a DL multi-TB transmission and indicating to enable a HARQ feedback, where the HARQ feedback of a HARQ process corresponding to any one of multi-TBs is enabled via an RRC configuration, or the HARQ feedback is not enabled or disabled (i.e., the HARQ feedback is neither enabled nor disabled) via an RRC configuration, the terminal starts the HARQ RTT timer corresponding to the any TB.

At step S8104, in a case of the PDCCH indicating a DL single-TB transmission and indicating to enable a HARQ feedback of a HARQ process of the DL single-TB transmission, where the HARQ feedback of the HARQ process is disabled via an RRC configuration, the terminal does not start the HARQ RTT timer corresponding to the HARQ process.

At step S8105, in a case of the PDCCH indicating a DL multi-TB transmission and indicating to enable a HARQ feedback, where the HARQ feedback of a HARQ processes corresponding to any one of multi-TBs is disabled via an RRC configuration, the terminal does not start the corresponding HARQ RTT timer.

At step S8106, in a case of the PDCCH indicating a DL single-TB transmission and indicating to disable a HARQ feedback of a HARQ process of the DL single-TB transmission, the terminal does not start the HARQ RTT timer corresponding to the HARQ process regardless of whether the HARQ feedback of the HARQ process is enabled or disabled via an RRC configuration or not.

At step S8107, in a case of the PDCCH indicating a DL multi-TB transmission and indicating to disable a HARQ feedback, the terminal does not start the HARQ RTT timer corresponding to a HARQ process corresponding to any one of multi-TBs regardless of whether a HARQ feedback of the HARQ process is enabled or disabled via an RRC configuration or not.

At step S8108, in a case of the PDCCH indicating a UL single-TB transmission, where the PDCCH configures a HARQ mode of a HARQ process of the UL single-TB transmission to be mode A, the terminal starts a UL HARQ RTT timer corresponding to the HARQ process.

At step S8109, in a case of the PDCCH indicating a UL multi-TB transmission, where the PDCCH configures a HARQ mode to be mode B, the terminal starts a UL HARQ RTT timer corresponding to a HARQ process of any one of multi-TBs.

At step S8110, in a case of the PDCCH indicating a UL single-TB transmission, where the PDCCH configures a HARQ mode of a HARQ process of the UL single-TB transmission to be mode B, the terminal does not start the UL HARQ RTT timer corresponding to the HARQ process.

At step S8111, in a case of the PDCCH indicating a UL multi-TB transmission, where the PDCCH configures a HARQ mode to be mode B, the terminal does not start the UL HARQ RTT timer corresponding to a HARQ process of any one of multi-TBs.

The method according to the embodiment of the disclosure may include at least one of steps S8101-step S8111. For example, step S8101 may be implemented as an independent embodiment, step S8102 may be implemented as an independent embodiment, and steps S8102 and S8108 may be implemented as an independent embodiment, which is not limited thereto.

In some embodiments, step S8102 and step S8108 may be performed in a reverse order or simultaneously, and step S8102 and step S8109 may be performed in a reverse order or simultaneously.

In some embodiments, steps S8102-S8111 are optional, and one or more of these steps may be omitted or replaced in different embodiments.

In some embodiments, steps S8103-S8111 are optional, and one or more of these steps may be omitted or replaced in different embodiments.

In the embodiments of the disclosure, some or all of the steps and their implementations in an embodiment may be arbitrarily combined with some or all of the steps in other embodiments, or may be arbitrarily combined with implementations in other embodiments.

The embodiments of the disclosure provide an apparatus for implementing any of the above methods, and the apparatus includes units/modules for implementing steps performed by the terminal in any of the above methods. The embodiments of the disclosure also provide another apparatus including units/modules for implementing steps performed by the network device (e.g., AN device, CN functional node, CN device, etc.) in any of the above methods.

It should be understood that the above units/modules in the above apparatus are divided based on their logical functions, and some or all of the above units/modules may be integrated on a single physical entity or may be physically separated in practical applications. In addition, the units/modules in the above apparatus may be implemented by software called by a processor. For example, the apparatus includes a processor connected to a memory. The memory stores instructions, and the processor calls the instructions stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. The units/modules in the apparatus may be implemented in the form of a hardware circuit. The functions of some or all of the units/modules may be achieved via the design of the hardware circuit. The hardware circuit is understood as one or more processors. For example, in an implementation, the hardware circuit is an application-specific integrated circuit (ASIC). The functions of some or all of the units/modules are achieved via the design of a logical relationship between components in the circuit. As another example, in another implementation, the hardware circuit may be implemented via a programmable logic device (PLD). Taking a field programmable gate array (FPGA) as an example, a large number of logical gates are included in the FPGA, and their connection relationships are configured via a configuration file, thereby implementing the functions of some or all of the units/modules. All the units/modules of the above apparatus may be implemented entirely via the software called by the processor, or entirely via the hardware circuit, or partially via software called by the processor and partially via the hardware circuit.

In the embodiments of the disclosure, the processor is a circuit for signal processing. In an implementation, the processor may be a circuit for instruction reading and executing, such as a CPU, a micro-processor, a graphics processing unit (GPU) (which is understood as a type of micro-processor), or a digital signal processor (DSP). In another implementation, the processor implements certain functions via a logical relationship of the hardware circuit. The relationship may be fixed or re-configurable. For example, the processor may be a hardware circuit implemented by an ASIC or a PLD, such as an FPGA. In a re-configurable hardware circuit, the procedure for the processor to load the configuration file and configure the hardware circuit is understood as a procedure for the processor to load instructions and implement some or all of the functions of the above units/modules. In addition, the processor may also be an AI-designed hardware circuit, i.e., an ASIC, such as a neural network processing unit (NPU), a tensor processing unit (TPU) and a deep learning processing unit (DPU).

FIG. 9A is a schematic diagram of a terminal according to an embodiment of the disclosure. As illustrated in FIG. 9A, the terminal 9100 includes a processing module 9101. In some embodiments, the processing module 9101 is configured to, in a case of a PDCCH indicating a link transmission, determine whether to start a HARQ RTT timer corresponding to the link transmission based on at least one of a HARQ mode configuration or a HARQ feedback configuration of the PDCCH. In some embodiments, the processing module 9101 is used for implementing at least one of the communication steps (such as steps 5102, 5103, 5104, 5105, 5106, 5107, 5108, 5109, 5110, 5111, 5112, 5113, 5114, 5115, 5116, 5117, 5118, 5119, 5120, 5121 and 5122, but are not limited thereto) such as transmitting and/or receiving performed by the terminal 101 in any of the above methods, which will not be repeated here.

FIG. 9B is a schematic diagram of a network device according to an embodiment of the disclosure. As illustrated in FIG. 9B, the network device 9200 includes a transceiver module 9201. The transceiver module 9201 is configured to, in a case of a PDCCH indicating a link transmission, send at least one of a HARQ mode configuration or a HARQ feedback configuration of the PDCCH to a terminal, in which the at least one of the HARQ mode configuration or the HARQ feedback configuration of the PDCCH is used to determine whether to start a HARQ RTT timer corresponding to the link transmission.

In some embodiments, the transceiver module includes a sending module and/or a receiving module. The sending module and the receiving module may be separate or integrated together. In some embodiments, the transceiver module and a transceiver are interchangeable.

In some embodiments, the processing module may be one module or include a plurality of sub-modules. In some embodiments, each of the sub-modules performs all or part of the steps performed by the processing module. In some embodiments, the processing module and a processor are interchangeable.

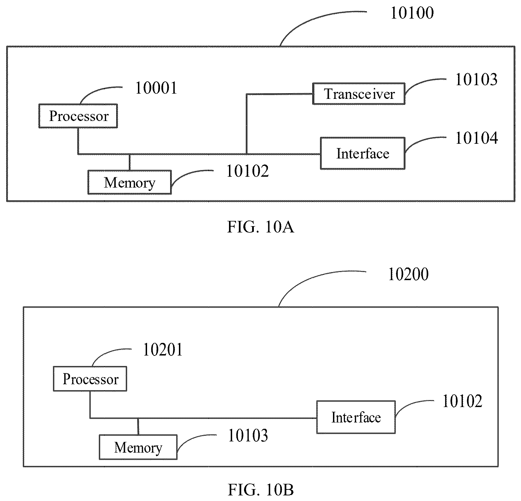

FIG. 10A is a schematic diagram of a communication device 10100 according to an embodiment of the disclosure. The communication device 10100 may be a network device (e.g., an AN device or a CN device), a terminal (e.g., a UE), a chip, chip system or processor that supports the network device to implement any of the above methods, or a chip, chip system or processor that supports the terminal to implement any of the above methods. The communication device 10100 is used to implement the methods described in the above method embodiments and may refer to the descriptions in the above method embodiments.

As illustrated in FIG. 10A, the communication device 10100 includes one or more processors 10101. The processor 10101 may be a general-purpose processor or a dedicated processor, such as a baseband processor or a central processor. The baseband processor is used to process communication protocols and communication data, while the central processor is used to control the communication device (e.g., a BS, a baseband chip, a terminal, a terminal chip, a DU or a CU), execute programs, and process data of the programs. The communication device 10100 is used to implement any of the above methods.

In some embodiments, the communication device 10100 further includes one or more memories 10102 for storing instructions. In some embodiments, all or part of the memories 10102 may be memories external to the communication device 10100.

In some embodiments, the communication device 10100 further includes one or more transceivers 10103. When the communication device 10100 includes one or more transceivers 10103, the transceiver 10103 performs the communication steps (for example, steps 5102, 5103, 5104, 5105, 5106, 5107, 5108, 5109, 5110, 5111, 5112, 5113, 5114, 5115, 5116, 5117, 5118, 5119, 5120, 5121 and 5122, but are not limited thereto) such as transmitting and/or receiving in the above method. The processor 10101 performs at least one of other steps (for example, steps 5102, 5103, 5104, 5105, 5106, 5107, 5108, 5109, 5110, 5111, 5112, 5113, 5114, 5115, 5116, 5117, 5118, 5119, 5120, 5121 and 5122, but are not limited thereto).

In some embodiments, the transceiver may include a receiver and/or a transmitter. The receiver and the transmitter may be separate or integrated together. In some embodiments, the terms "transceiver", "transceiver unit", "transceiver machine" and "transceiving circuit" are interchangeable, and the terms "transmitter", "transmitting unit", "transmitter machine" and "transmitting circuit" are also interchangeable. In addition, the terms "receiver", "receiving unit", "receiver machine" and "receiving circuit" are interchangeable.

In some embodiments, the communication device 10100 includes one or more interface circuits 10104. In some embodiments, the interface circuits 10104 are connected to the memories 10102. The interface circuits 10104 are used to receive signals from the memories 10102 or other devices and send signals to the memories 10102 or other devices. For example, the interface circuits 10104 read instructions stored in the memories 10102 and send the instructions to the processors 10101.

The communication device 10100 described in the embodiment may be a network device or a terminal, but the scope of the communication device 10100 is not limited to that described in the disclosure, and the structure of the communication device 10100 is not limited by FIG. 10A. The communication device may be a standalone device or part of a larger device. For example, the communication device may be: (1) a standalone integrated circuit (IC), chip, chip system or sub-system; (2) a collection of one or more ICs (in some embodiments, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an artificial intelligence (AI) device, etc.; or (6) others.

FIG. 10B is a schematic diagram of a chip 10200 according to an embodiment of the disclosure. The case that the communication device 10100 is a chip or a chip system may refer to the schematic diagram of the chip 10200 shown in FIG. 10B, which is not limited herein.

The chip 10200 includes one or more processors 10201, and the chip 10200 is used to perform any of the above methods.

In some embodiments, the chip 10200 includes one or more interface circuits 10202. In some embodiments, the interface circuits 10202 are connected to a memory 10203. The interface circuits 10202 are used to receive signals from the memory 10203 or other devices and send signals to the memory 10203 or other devices. For example, the interface circuits 10202 read instructions stored in the memory 10203 and send the instructions to the processors 10201.

In some embodiments, the interface circuit 10202 performs at least one of the communication steps (for example, steps 5102, 5103, 5104, 5105, 5106, 5107, 5108, 5109, 5110, 5111, 5112, 5113, 5114, 5115 and 5116, but are not limited thereto) such as transmitting and/or receiving in the above method. The processor 10201 performs at least one of other steps (for example, steps 5102, 5103, 5104, 5105, 5106, 5107, 5108, 5109, 5110, 5111, 5112, 5113, 5114, 5115 and 5116, but are not limited thereto).

In some embodiments, the terms "interface circuit", "interface", "transceiver pin", "transceiver machine", etc. are interchangeable.

In some embodiments, the chip 10200 further includes one or more memories 10203 for storing instructions. In some embodiments, all or part of the memories 10203 are external to the chip 10200.

The disclosure also provides a storage medium. The storage medium stores instructions, and when the instructions are executed by the communication device 10100, the communication device 10100 is caused to implement any of the above methods. In some embodiments, the storage medium may be an electronic storage medium or a computer-readable storage medium, which is not limited herein. The storage medium may also be a storage medium readable by other devices. In some embodiments, the storage medium may be a non-transitory storage medium or a transitory storage medium, which is not limited herein.

The disclosure also provides a program product. When the program product is executed by the communication device 10100, the communication device 10100 is caused to implement any of the above methods. In some embodiments, the program product is a computer program product.

The disclosure also provides a computer program. When the computer program is executed by a computer, the computer is caused to implement any of the above methods.

## Claims

1. A method for starting a timer, comprising:
in a case of a physical downlink control channel (PDCCH) indicating a link transmission, determining, based on at least one of a hybrid automatic repeat request (HARQ) mode configuration or a HARQ feedback configuration of the PDCCH, whether to start a HARQ round-trip time (RTT) timer corresponding to the link transmission.

2. The method of claim 1, further comprising:
in a case of the link transmission being a downlink (DL) multi-transmission block (TB) transmission, determining a sub-frame where a terminal receives a last repetition of a last TB as a starting time of the HARQ RTT timer, wherein the HARQ RTT timer is a timer corresponding to a DL.

3. The method of claim 1, further comprising:
in a case of the link transmission being an uplink (UL) multi-TB transmission, determining a sub-frame where a terminal sends a last repetition of a last TB as a starting time of a UL HARQ RTT timer, wherein the UL HARQ RTT timer is a timer corresponding to a UL.

4. The method of claim 1, further comprising:
in a case of the link transmission being a DL single-TB transmission, determining a sub-frame where a terminal receives a last repetition of a TB as a starting time of the HARQ RTT timer, wherein the HARQ RTT timer is a timer corresponding to a DL.

5. The method of claim 1, further comprising:
in a case of the link transmission being a UL single-TB transmission, determining a sub-frame where a terminal sends a last repetition of a TB as a starting time of a UL HARQ RTT timer, wherein the UL HARQ RTT timer is a timer corresponding to a UL.

6. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL single-TB transmission and indicating to enable a HARQ feedback of a HARQ process of the DL single-TB transmission, where the HARQ feedback of the HARQ process is enabled via a radio resource control (RRC) configuration, starting the HARQ RTT timer corresponding to the HARQ process.

7. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL single-TB transmission and indicating to enable a HARQ feedback of a HARQ process of the DL single-TB transmission, where the HARQ feedback of the HARQ process is not enabled or disabled via an RRC configuration, starting the HARQ RTT timer corresponding to the HARQ process.

8. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL multi-TB transmission and indicating to enable a HARQ feedback, where the HARQ feedback of a HARQ process corresponding to any TB among DL multi-TBs is enabled via an RRC configuration, starting the HARQ RTT timer of the HARQ process corresponding to the any TB.

9. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL multi-TB transmission and indicating to enable a HARQ feedback, where the HARQ feedback of a HARQ process corresponding to any TB among DL multi-TBs is not enabled or disabled via an RRC configuration, starting the HARQ RTT timer of the HARQ process corresponding to the any TB.

10. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL single-TB transmission and indicating to enable a HARQ feedback of a HARQ process of the DL single-TB transmission, where the HARQ feedback of the HARQ process is disabled via an RRC configuration, not starting the HARQ RTT timer corresponding to the HARQ process.

11. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL multi-TB transmission and indicating to enable a HARQ feedback, where the HARQ feedback of a HARQ process corresponding to any TB among DL multi-TBs is disabled via an RRC configuration, not starting the HARQ RTT timer of the HARQ process corresponding to the any TB.

12. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL single-TB transmission and indicating to disable a HARQ feedback of a HARQ process of the DL single-TB transmission, where the HARQ feedback of the HARQ process is disabled via an RRC configuration, not starting the HARQ RTT timer corresponding to the HARQ process.

13. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL single-TB transmission and indicating to disable a HARQ feedback of a HARQ process of the DL single-TB transmission, where the HARQ feedback of the HARQ process is enabled via an RRC configuration, not starting the HARQ RTT timer corresponding to the HARQ process.

14. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL single-TB transmission and indicating to disable a HARQ feedback of a HARQ process of the DL single-TB transmission, where the HARQ feedback of the HARQ process is not enabled or disabled via an RRC configuration, not starting the HARQ RTT timer corresponding to the HARQ process.

15. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL multi-TB transmission and indicating to disable a HARQ feedback, where the HARQ feedback of a HARQ process corresponding to any TB among DL multi-TBs is disabled via an RRC configuration, not starting the HARQ RTT timer of the HARQ process corresponding to the any TB.

16. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL multi-TB transmission and indicating to disable a HARQ feedback, where the HARQ feedback of a HARQ process corresponding to any TB among DL multi-TBs is enabled via an RRC configuration, not starting the HARQ RTT timer of the HARQ process corresponding to the any TB.

17. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a DL multi-TB transmission and indicating to disable a HARQ feedback, where the HARQ feedback of a HARQ process corresponding to any TB among DL multi-TBs is not enabled or disabled via an RRC configuration, not starting the HARQ RTT timer of the HARQ process corresponding to the any TB.

18. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a UL single-TB transmission and configuring a HARQ mode of a HARQ process of the UL single-TB transmission to be mode A, starting a UL HARQ RTT timer corresponding to the HARQ process.

19. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a UL multi-TB transmission and configuring a HARQ mode to be mode A, starting a UL HARQ RTT timer corresponding to a HARQ process of any one of multi-TBs.

20. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a UL single-TB transmission and configuring a HARQ mode of a HARQ process of the UL single-TB transmission to be mode B, not starting a UL HARQ RTT timer corresponding to the HARQ process.

21. The method of claim 1, wherein in a case of the PDCCH indicating the link transmission, determining, based on the at least one of the HARQ mode configuration or the HARQ feedback configuration of the PDCCH, whether to start the HARQ RTT timer corresponding to the link transmission, comprises:
in a case of the PDCCH indicating a UL multi-TB transmission and configuring a HARQ mode to be mode B, not starting a UL HARQ RTT timer corresponding to a HARQ process of any one of multi-TBs.

22. A method for starting a timer, comprising:
in a case of a physical downlink control channel (PDCCH) indicating a link transmission, sending at least one of a hybrid automatic repeat request (HARQ) mode configuration or a HARQ feedback configuration of the PDCCH to a terminal, wherein the at least one of the HARQ mode configuration or the HARQ feedback configuration of the PDCCH is used to determine whether to start a HARQ round-trip time (RTT) timer corresponding to the link transmission.

23. A terminal, comprising:
a processing module, configured to, in a case of a physical downlink control channel (PDCCH) indicating a link transmission, determine, based on at least one of a hybrid automatic repeat request (HARQ) mode configuration or a HARQ feedback configuration of the PDCCH, whether to start a HARQ round-trip time (RTT) timer corresponding to the link transmission.

24. A network device, comprising:
a transceiver module, configured to, in a case of a physical downlink control channel (PDCCH) indicating a link transmission, send at least one of a hybrid automatic repeat request (HARQ) mode configuration or a HARQ feedback configuration of the PDCCH to a terminal, wherein the at least one of the HARQ mode configuration or the HARQ feedback configuration of the PDCCH is used to determine whether to start a HARQ round-trip time (RTT) timer corresponding to the link transmission.

25. A terminal, comprising:
one or more processors;
wherein the terminal is configured to implement the method for starting the timer of any one of claims 1-21.

26. A network device, comprising:
one or more processors;
wherein the network device is configured to implement the method for starting the timer of claim 22.

27. A communication system, comprising a terminal and a network device, wherein the terminal is configured to implement the method for starting the timer of any one of claims 1-21, and the network device is configured to implement the method for starting the timer of claim 22.

28. A storage medium, wherein the storage medium stores instructions, and when the instructions are executed by a communication device, the communication device is caused to implement the method for starting the timer of any one of claims 1-21 or the method for starting the timer of claim 22.
